# EUROPEAN PATENT APPLICATION

(11) **EP 4 556 409 A1**
(43) Date of publication of application: **21.05.2025**
(21) Application number: 23841711.7
(22) Date of filing: 07.02.2023
(51) Int. Cl.: B65G 1/137, G06T 7/62, G06T 7/00, G06Q 10/08

(54) **ARTICLE SORTING METHOD AND APPARATUS, AND COMPUTER-READABLE STORAGE MEDIUM**

(30) Priority: 21.07.2022 CN 202210860322
(71) Applicant: Jingdong Technology Holding Co., Ltd., Beijing 100176 (CN)
(72) Inventor: CHEN, Zhiyong, Beijing 100176 (CN); YU, Wei, Beijing 100176 (CN); MEI, Tao, Beijing 100176 (CN)
(74) Representative: Prüfer & Partner mbB Patentanwälte · Rechtsanwälte
(86) International application number: PCT/CN2023/074814
(87) International publication number: WO 2024/016633

(57) **Abstract**

An article sorting method and apparatus, and a computer-readable storage medium, which relate to the field of warehouse logistics. The article sorting method comprises: acquiring sorting information of a plurality of articles in a goods box, wherein the sorting information comprises sorting surfaces and sorting points of the articles, and an image of the goods box where the articles are located; determining a proximity relationship between the articles according to the image of the goods box where the articles are located; determining a constraint relationship between the articles according to at least one of an inclination angle and a height of each article, and the proximity relationship between the articles, wherein the inclination angle of each article is determined according to the sorting surface and the sorting point of the article, and the height of each article is determined according to the image of the goods box where the article is located; and determining a sorting sequence of the plurality of articles according to the constraint relationship. By means of the article sorting method and apparatus, the success rate of article sorting can be improved.

## Description

### CROSS-REFERENCE TO RELATED APPLICATIONS

This application is based on and claims the benefit of priority to the Chinese patent application No. 202210860322.8 filed on July 21, 2022, which is hereby incorporated by reference in its entirety into the present application.

### TECHNICAL FIELD

This disclosure relates to the field of warehousing and logistics, particularly to a method and apparatus for picking items, and a computer-readable storage medium.

### BACKGROUND

With the popularity of online shopping, the goods circulation is becoming more just-in-time and multi-variant. In warehouses and distribution centers, the types and quantities of items to be sorted have increased sharply, and the workload of sorting operations in distribution warehouses is becoming increasingly heavy. Manual sorting is no longer sufficient to meet the demands of large-scale sorting, and automated sorting has become the key to improving sorting efficiency.

Items can be stacked in boxes, which means that one item may be covered by another. In case that the system does not know the stacking relationship between the items, it may generate an incorrect picking order. For example, it is difficult to pick up an item covered under other items. In addition, picking up an item below first can cause an upper item to fall, thereby damaging the item.

### SUMMARY

According to a first aspect of the present disclosure, there is provided an item picking method, comprising: acquiring picking information of multiple items in a box, wherein the picking information comprises picking surfaces and picking points of the multiple items, and an image of the box in which the multiple items are located; determining a proximity relationship between the multiple items based on the image of the box in which the multiple items are located; determining a constraint relationship between the multiple items based on the proximity relationship between the multiple items and at least one of tilt angles or heights of the multiple items, wherein the tilt angles of the multiple items are determined based on the picking surfaces and the picking points of the multiple items, and the heights of the multiple items are determined based on the image of the box in which the multiple items are located; and determining a picking order for the multiple items based on the constraint relationship.

In some embodiments, the determining the proximity relationship between the multiple items based on the image of the box in which the multiple items are located comprises: in case that two items of the multiple items are in contact with each other, determining that the two items are proximity items to each other; and in case that one item of the multiple items is in contact with two other items of the multiple items, determining that the two other items are the proximity items to each other.

In some embodiments, the determining the constraint relationship between the multiple items comprises: in case that a height of one item of the multiple items is greater than a height of its proximity item, determining that the item has a constraint on the proximity item.

In some embodiments, the determining the constraint relationship between the multiple items comprises: grouping the multiple items based on tilt angles of the multiple items; and in case that an item and a proximity item of the item belong to a same group, determining the constraint relationship between the item and the proximity item based on the tilt angles of the item and the proximity item.

In some embodiments, wherein the in case that the item and the proximity item of the item belong to the same group, determining the constraint relationship between the item and the proximity item based on their tilt angles comprises: determining a first picking direction based on areas of the picking surfaces of items belong to the same group, wherein the first picking direction indicates a first picking order of the items belong to the same group; determining a second picking direction of the item and the proximity item based on the picking points of the item and the proximity item, wherein the second picking direction indicates a second picking order of the item and the proximity item; and determining the constraint relationship between the item and the proximity item based on the first picking direction and the second picking direction.

In some embodiments, the determining the first picking direction based on the areas of the picking surfaces of the items belong to the same group comprises: in case that an area ratio of a largest picking surface to a smallest picking surface among the picking surfaces of the items belong to the same group exceeds a ratio threshold, calculating a first vector as the first picking direction, wherein the first vector represents a direction from a picking point on the largest picking surface to a picking point on the smallest picking surface.

In some embodiments, the determining the first picking direction based on the areas of the picking surfaces of the items belong to the same group comprises: in case that the area ratio of the largest picking surface to the smallest picking surface among the picking surfaces of the items belong to the same group does not exceed the ratio threshold, calculating a second vector based on the tilt angles of the items belong to the same group, wherein the second vector represents an overall tilt direction of the items belong to the same group; determining the first vector as the first picking direction in case that an angle between the first vector and the second vector does not exceed a first threshold; and determining an opposite direction of the first vector as the first picking direction in case that the angle between the first vector and the second vector exceeds the first threshold.

In some embodiments, the second picking direction is of a direction from a picking point on a picking surface of the item to a picking point on a picking surface of the proximity item.

In some embodiments, the determining the constraint relationship between the item and the proximity item based on the first picking direction and the second picking direction comprises:
in case that an angle between the first picking direction and the second picking direction does not exceed a second threshold, determining that the item has a constraint on the proximity item.

In some embodiments, the determining the constraint relationship between the multiple items comprises: in case that the item and the proximity item do not belong to the same group and a height of the item is greater than a height of the proximity item, determining that the item has a constraint on the proximity item.

In some embodiments, the multiple items have multiple picking surfaces, and the determining the proximity relationship between the multiple items based on the image of the box in which the multiple items are located comprises: in case that two picking surfaces of the multiple picking surfaces contact with each other, determining the two picking surfaces as proximity picking surfaces to each other; and in case that one picking surface of the multiple picking surfaces contacts to other two picking surfaces of the multiple picking surfaces, determining that the other two picking surfaces are the proximity picking surfaces to each other.

In some embodiments, the determining the constraint relationship between the multiple items comprises: in case that a height of a picking surface is greater than a height of its proximity picking surface, determining that the picking surface has a constraint on the proximity picking surface.

In some embodiments, a tilt angle of an item comprises a tilt angle of the picking surface of the item, and the determining the constraint relationship between the multiple items comprises: grouping the picking surfaces of the multiple items based on the tilt angles of the picking surfaces; and in case that a picking surface and its proximity picking surface belong to a same group, determining the constraint relationship between the picking surface and the proximity picking surface based on their tilt angles.

In some embodiments, the in case that the picking surface and its proximity picking surface belong to the same group, determining the constraint relationship between the picking surface and the proximity picking surface based on their tilt angles comprises: determining a first picking direction based on the areas of the picking surfaces belong to the same group, wherein the first picking direction indicates a first picking order of the picking surfaces belong to the same group; determining a second picking direction for the picking surface and the proximity picking surface based on the picking points of the picking surface and the proximity picking surface, wherein the second picking direction indicates a second picking order of the picking surface and the proximity picking surface; and determining the constraint relationship between the picking surface and the proximity picking surface based on the first picking direction and the second picking direction.

In some embodiments, the determining the first picking direction based on the areas of the picking surfaces belong to the same group comprises: in case that an area ratio of a largest picking surface to a smallest picking surface among the picking surfaces belong to the same group exceeds a ratio threshold, calculating a first vector as a first picking direction, wherein the first vector represents a direction from a picking point on the largest picking surface to a picking point on the smallest picking surface.

In some embodiments, the determining the first picking direction based on the areas of the picking surfaces of the items belong to the same group comprises: in case that the ratio of the largest picking surface to the smallest picking surface among the picking surfaces belong to the same group does not exceed the ratio threshold, calculating a second vector based on the tilt angles of the picking surfaces belong to the same group, wherein the second vector represents an overall tilt direction of the picking surfaces belong to the same group; in case that an angle between the first vector and the second vector does not exceed a third threshold, determining the first vector as the first picking direction; and in case that the angle between the first vector and the second vector exceeds the third threshold, determining an opposite direction of the first vector as the first picking direction.

In some embodiments, the second picking direction represents a direction from a picking point on the picking surface to a picking point on the proximity picking surface.

In some embodiments, the determining the constraint relationship between the picking surface and the proximity picking surface based on the first picking direction and the second picking direction comprises: in case that the angle between the first picking direction and the second picking direction does not exceed a fourth threshold, determining that the picking surface has a constraint on the proximity picking surface.

In some embodiments, the determining the constraint relationship between the multiple items comprises: in case that the picking surface and the proximity picking surface do not belong to the same group and in case that a height of the picking surface is greater than a height of the proximity picking surface, determining that the picking surface has a constraint on the proximity picking surface.

In some embodiments, the determining the picking order for the multiple items based on the constraint relationship comprises: generating a sort result based on picking information, wherein the sort result represents a difficulty of picking the multiple items; and determining the picking order of the multiple items based on the sort result and the constraint relationship between the multiple items.

According to a second aspect of the present disclosure, there is provided an item picking apparatus, comprising: an acquisition module for acquiring picking information of multiple items in a box, wherein the picking information comprises picking surfaces and picking points of the multiple items, and an image of the box in which the multiple items are located; a proximity relationship determination module 92 for determining a proximity relationship between the multiple items according to the image of the box in which the multiple items are located; a constraint relationship determination module for determining a constraint relationship between the multiple items based on the proximity relationship between the multiple items and at least one of tilt angles or heights of the multiple items, wherein the tilt angles of the multiple items are determined based on the picking surfaces and picking points of the multiple items, and the heights of the multiple items are determined based on the image of the box in which the multiple items are located; and a picking order determination module 94 for determining a picking order for the multiple items based on the constraint relationship.

According to a third aspect of the present disclosure, there is provided an item picking apparatus, comprising: a memory; and a processor coupled to the memory, the processor configured to, based on instructions stored in the memory, carry out the item picking method according to any embodiment of the present disclosure.

According to a fourth aspect of the present disclosure, there is provided a computer-readable storage medium stored thereon computer program instructions that, when executed by a processor, implement the item picking method according to any embodiment of the present disclosure.

### BRIEF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:
FIG. 1 shows a flowchart of an item picking method according to some embodiments of the present disclosure;
FIG. 2 shows a schematic diagram of stacked items according to some embodiments of the present disclosure;
FIG. 3 shows a schematic diagram of stacked items according to other embodiments of the present disclosure;
FIG. 4 (a) shows a schematic diagram of determining a first picking direction according to some embodiments of the present disclosure;
FIG. 4 (b) shows a schematic diagram of determining a first picking direction according to other embodiments of the present disclosure;
FIG. 4 (c) shows a schematic diagram of determining a second picking direction according to some embodiments of the present disclosure;
FIG. 4 (d) shows a schematic diagram of determining a constraint relationship between proximity items according to some embodiments of the present disclosure;
FIG. 5 shows a flowchart of generating a constraint relationship matrix according to some embodiments of the present disclosure;
FIG. 6 shows a schematic diagram of stacked items according to still other embodiments of the present disclosure;
FIG. 7 shows a schematic diagram of stacked items according to further embodiments of the present disclosure;
FIG. 8 shows a schematic diagram of determining a constraint relationship between proximity picking surfaces according to some embodiments of the present disclosure;
FIG. 9 shows a block diagram of an item picking apparatus according to some embodiments of the present disclosure;
FIG. 10 shows a block diagram of an item picking apparatus according to other embodiments of the present disclosure;
FIG. 11 is a block diagram showing a computer system for implementing some embodiments of the present disclosure.

### DETAILED DESCRIPTION

Various exemplary embodiments of the present disclosure will now be described in detail with reference to the accompanying drawings. Notice that, unless otherwise specified, the relative arrangement, numerical expressions and values of the components and steps set forth in these examples do not limit the scope of the invention.

At the same time, it should be understood that, for ease of description, the dimensions of the various parts shown in the drawings are not drawn to actual proportions.

The following description of at least one exemplary embodiment is in fact merely illustrative and is in no way intended as a limitation to the invention, its application or use.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

Items can be stacked in boxes with one item over another. The stacking of items can have an impact on the picking success rate, and it is difficult to achieve a firm grip on an item underneath another item. In case that the order of picking is not appropriate, for example, the picking of a lower item is prior to the picking of an upper item, the upper item may fall, resulting in damage to the item. In addition to items stacked vertically, items can lean so that a left item partially rests on a right item, making it difficult to grip the right item. Also, in case that the right item is taken out first, the left item may fall and be damaged due to lack of support.

In related technologies, it is difficult to determine the constraint relationship between stacked items, so items can only be picked according to the order in which they are identified, which can cause damage to the items.

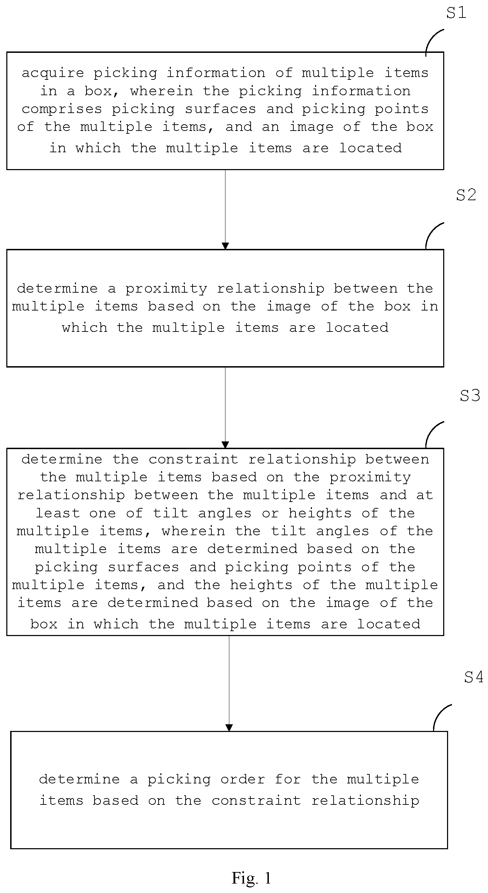

FIG. 1 shows a flowchart of an item picking method according to some embodiments of the present disclosure.

As shown in FIG. 1, the item picking method comprises steps S1 to S4.

In step S1, picking information of multiple items in a box is acquired, wherein the picking information comprises picking surfaces and picking points of the items, and an image of the box in which the items are located.

For example, a camera is used to capture an image of the items stacked in the box from the top of the box, i.e., to take a top view of the items, and picking points and picking surfaces are calculated for the items, wherein the picking point is a point on an item that a robot arm touches when gripping or sucking the item, and the picking surface is a surface on which the picking point is located.

In step S2, a proximity relationship between the items is determined based on the image of the box in which the items are located.

In some embodiments, in case that two items contact with each other, it is determined that the two items are proximity items to each other; in case that one item is in contact with two other items, it is determined that the two other items are proximity items to each other.

For example, proximity items comprise adjacent items and sub-adjacent items, wherein adjacent items are two items in direct contact with each other and sub-adjacent items are adjacent items of adjacent items.

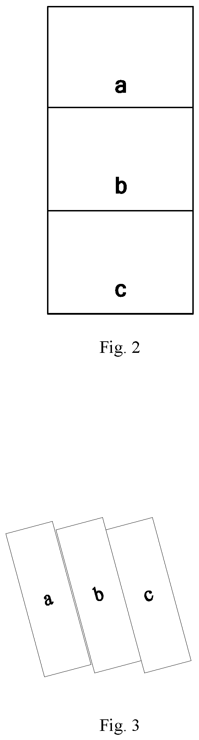

FIG. 2 shows a schematic diagram of stacked items according to some embodiments of the present disclosure.

FIG. 2 is a two-dimensional side view of items "a", "b", and "c" stacked vertically in a box. As shown in FIG. 2, items "a" and "b" are in contact, so that they are determined as proximity items. Item "b" is in contact with both items "a" and c, and there may also be a constraint relationship between items "a" and c. Therefore, items "a" and "c" are also defined as having a proximity relationship.

This disclosure considers not only the constraint relationship between two items in direct contact, but also the potential constraint relationship between two items in indirect contact, thereby taking a comprehensive view of various possible situations to reduce omissions and improve the picking success rate based on the constraint relationship.

In some embodiments, a machine learning model is used to recognize the image of the box in which the items are located and determine whether the items are in contact with each other.

For example, in case that two items have edges or surfaces that partially or completely overlap, the two items are considered to be in contact with each other.

In step S3, the constraint relationship between the items is determined based on the proximity relationship between the items and at least one of tilt angles or heights of the items, wherein the tilt angles of the items are determined based on the picking surfaces and picking points of the items, and the heights of the items are determined based on the image of the box in which the items are located.

In some embodiments, the constraint relationship between the items represents a stacking relationship between the items.

In some embodiments, determining a constraint relationship between the items comprises: determining that an item has a constraint on a proximity item in case that the height of the item is greater than the height of the proximity item.

In FIG. 2, in case that the height of item "a" is higher than that of item "b", and items "a" and "b" are proximity items to each other, then item "a" has a constraint on b. Similarly, items "a" and "c" are also proximity items and a is higher than c, so item "a" also has a constraint on item c. The height of an item can be the height of a surface of the item, the height of the geometric center of the item, the height of the center of gravity of the item, the height of a picking point on the item, etc., or multiple heights described above can be considered comprehensively according to actual needs.

In some embodiments, determining a constraint relationship between the items comprises: grouping the multiple items based on tilt angles of the multiple items; in case that an item and a proximity item of the item belong to the same group, determining a constraint relationship between the item and the proximity item based on the tilt angles of the items.

For example, items with the same tilt tendency may lean against each other. Therefore, items with the same tilt tendency are grouped together and a stacking relationship is determined for the items in the same group based on their tilt angles. In addition, grouping can provide a prior guidance on the picking order of a group of items with the same tilt tendency. Grouping by tilt tendency can provide a degree of error tolerance in determining the picking order for the members in the same group. Even in case that some members deviate from the main direction to some extent, the overall consistent picking order of the group is not affected.

In some embodiments, grouping the multiple items based on tilt angles of the multiple items comprises: grouping items with tilt angles within a predetermined range.

FIG. 3 shows a schematic diagram of stacked items according to some embodiments of the present disclosure.

FIG. 3 is a two-dimensional side view of items "a", "b", and "c" stacked horizontally in a box. As shown in FIG.3, items "a", "b", and "c" have similar tilt angles and can be grouped together.

In some embodiments, in case that an item and a proximity item of the item belong to the same group, determining a constraint relationship between the item and the proximity item based on the tilt angles of the items comprises: determining that the item has a constraint on the adjacent item in case that an angle between the direction of the tilt angle of the group to which the item belongs and a direction from the item to the adjacent item is less than a preset threshold.

For example, as shown in FIG. 3, item "a" lies over part of item b. In the constraint relationship calculation, items "a" , "b", and "c" are all tilted to the left. Item "a" is to the left of its proximity item "b", i.e. the direction from item "a" to item "b" is from right to left, which is opposite to the tilt angle direction, so item "a" has no constraint on item b. On the contrary, the direction from item "b" to item "a" is from left to right, which is similar to the tilt angle (direction), so item "b" has a constraint on item "a".

In some embodiments, determining a constraint relationship between the item and the proximity item based on the tilt angles of the items comprises: determining a first picking direction based on picking surface areas of the items belong to the same group, wherein the first picking direction indicates a first picking order of the items belong to the same group; in the case where the item and the proximity item belong to the same group, determining a second picking direction of the item and the proximity item based on the picking points of the item and the proximity item, wherein the second picking direction indicates a second picking order of the item and the proximity item; determining the constraint relationship between the item and the proximity item based on the first picking direction and the second picking direction.

In some embodiments, the tilt angle of an item is an angle between the normal vector of the picking surface of the item and a bottom surface of the box.

The first picking direction can be determined according to the following method to represent the stacking relationship of the items in the same group.

In some embodiments, in case that the item and the proximity item belong to the same group, determining a first picking direction based on picking surface areas of the items belong to the same group comprises: calculating a first vector as a first picking direction in case that a ratio of the largest picking surface to the smallest picking surface among the picking surfaces of the items belong to the same group exceeds a ratio threshold, wherein the first vector represents a direction from a picking point on the largest picking surface to a picking point on the smallest picking surface.

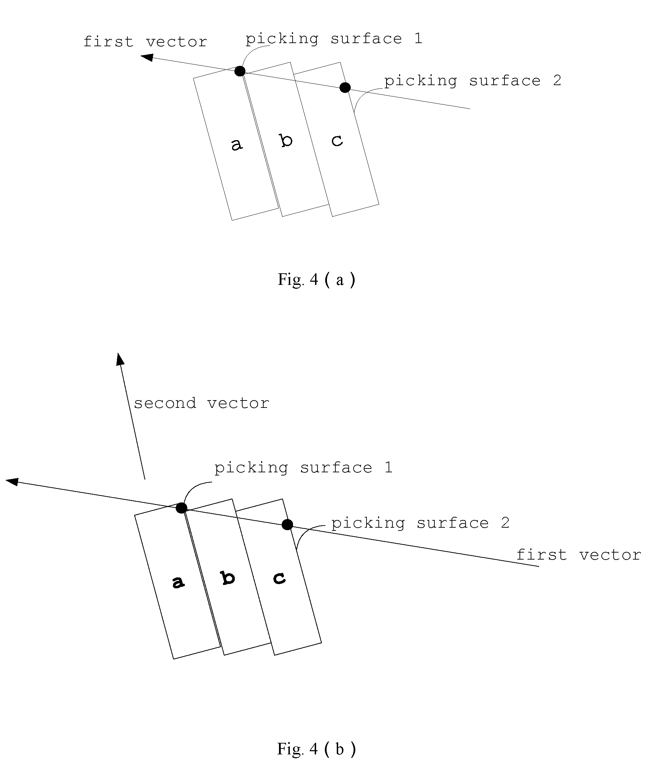

FIG. 4 (a) shows a schematic diagram of determining a first picking direction according to some embodiments of the present disclosure.

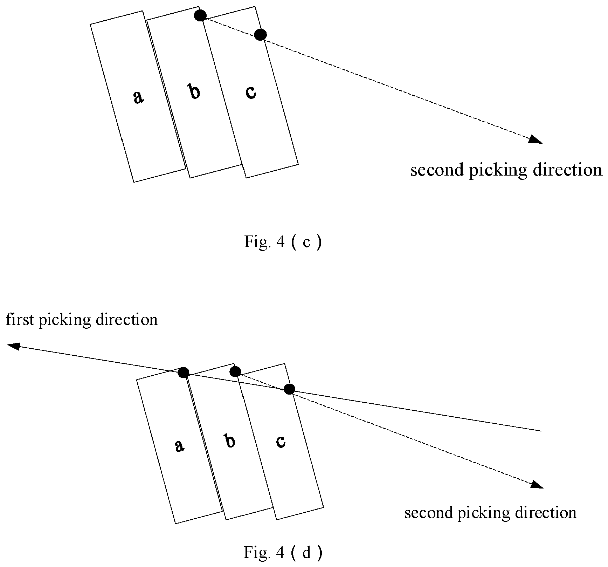

FIG. 4 (a) shows a two-dimensional side view of items "a" , "b", and "c". As shown in FIG. 4, items "a", "b", "c" have similar tilt angles and are grouped together.

Assuming that only one picking surface is considered for each item, the picking surfaces of items "a", "b", and "c" are sorted by area. In FIG. 4 (a), it is assumed that the smallest picking surface is picking surface 1, the largest picking surface is picking surface 2, and the black dots are picking points. The direction from the largest picking surface to the smallest picking surface is indicated by the solid arrow in the figure. Assuming that the area ratio of picking surface 2 to picking surface 1 exceeds the ratio threshold, it is considered that there is a significant difference in picking surface areas of the items belong to the same group. The first picking direction is from the largest picking surface to the smallest picking surface.

In case that an item has multiple picking surfaces, a picking surface that is easiest to pick is selected based on the difficulty of gripping; or for each picking surface of the item, an angle between the tilt angle of this picking surface and the tilt angle of the item is calculated, and a picking surface with an angle less than a preset threshold, that is, a picking surface that is consistent with the tilt tendency of the item is selected.

In general, the area of the picking surface exposed on the top item is larger, while the area of the picking surface exposed on a covered item is smaller. The areas of the picking surfaces can reflect the stacking relationship between the items, thus the first picking direction can be determined for the items belong to the same group based on the areas of the picking surfaces.

In some embodiments, determining the first picking direction for the items belong to the same group based on picking surface areas of the items belong to the same group comprises: in case that the ratio of the largest picking surface to the smallest picking surface among the picking surfaces of the items belong to the same group does not exceed the ratio threshold, calculating a second vector based on the tilt angles of the items belong to the same group, wherein the second vector represents an overall tilt direction of the items belong to the same group; determining the first vector as the first picking direction in case that an angle between the first vector and the second vector does not exceed a first threshold; determining the opposite direction of the first vector as the first picking direction in case that the angle between the first vector and the second vector exceeds the first threshold.

For example, in case that there is no significant difference in the areas of the picking surfaces of the items belong to the same group, then it is determined whether the direction of "the vector connecting the picking point on the maximum picking surface to the picking point on the minimum picking surface" is similar to the overall tilt direction of the group. In case that they are similar, the picking order of the group members is in the direction of the vector that connects the picking point on the largest picking surface to the picking point on the smallest picking surface. In case that they are not similar, the picking order of the group members is in the opposite direction of the vector that connects the picking point on the largest picking surface to the picking point on the smallest picking surface.

In addition, the tilt angle of an item belong to the same group can be selected as the overall tilt direction of the group, or the average or median tilt angle of the group can be calculated as the overall tilt direction of the group, which is not specifically limited herein.

FIG. 4 (b) shows a schematic diagram of determining a first picking direction according to other embodiments of the present disclosure.

As shown in FIG. 4 (b), assuming that the ratio of picking surface 2 to picking surface 1 does not exceed the ratio threshold, it is also necessary to compare the first vector and the second vector (i.e., the overall tilt direction of the group of items). Assuming the first threshold is 90 degrees, it is evident that the angle between the first vector and the second vector in FIG. 4 (b) does not exceed 90 degrees. Therefore, the first picking direction is the direction of the first vector. On the contrary, in case that the angle between the first vector and the second vector exceeds 90 degrees, then the first picking direction is the opposite direction of the first vector. That is, the first picking direction that is finally selected represents a direction that is closer to the overall tilt trend of the group of items, so that the first picking direction can more accurately represent the stacking situation of the group.

In some embodiments, the second picking direction represents a direction from the picking point on the picking surface of the item to the picking point on the picking surface of its proximity item.

FIG. 4 (c) shows a schematic diagram of determining a second picking direction according to some embodiments of the present disclosure.

As shown in FIG. 4 (c), assuming the current item is "b", it is necessary to determine the constraint relationship between item "b" and its proximity item c. Therefore, the second picking direction is defined as from the picking point on item "b" to the picking point on item c.

In some embodiments, determining the constraint relationship between the item and the proximity item based on the first picking direction and the second picking direction comprises: determining that the item has a constraint on the proximity item in case that the angle between the first picking direction and the second picking direction does not exceed a second threshold.

FIG. 4 (d) shows a schematic diagram of determining a constraint relationship between proximity items according to some embodiments of the present disclosure.

The first picking direction and the second picking direction are shown in FIG. 4 (d). Assuming that the second threshold is 90 degrees, in FIG. 4 (d), the angle between the first picking direction and the second picking direction is clearly greater than the second threshold. Therefore, item "b" has no constraint on item c. On the contrary, in case that the angle between the first picking direction and the direction from the picking point of item "c" to the picking point of item "b" is less than the threshold, item "c" has a constraint on item b.

In some embodiments, determining a constraint relationship between the items comprises: in case that the item and the proximity item do not belong to the same group and the height of the item is greater than that of the proximity item, determining that the item has a constraint on the proximity item.

For example, in case that two items do not have similar tilt tendencies, it is not necessary to determine a left-right stacking constraint, and only the lengthwise stacking situation needs to be determined. Therefore, the constraint relationship is determined based on height.

In some embodiments, determining a constraint relationship between the items comprises: generating a constraint relationship matrix based on at least one of heights and tilt angles.

The values of elements in the constraint relationship matrix adjacent_matrix are defined as follows:
adjacent_matrix[i,j]=0: item i and item j are not proximity items and have no constraint relationship;
adjacent_matrix[i,j]=1: item i and item j are proximity items and item i has a constraint on item j;
adjacent_matrix[i,j]=-1: item i and item j are proximity items and item j has a constraint on item i;
adjacent_matrix[i,j]=2: item i and item j are proximity items but have no constraint relationship.

In case that adjacent_matrix[i,j]=1, then the corresponding adjacent_matrix [j, i]=-1.

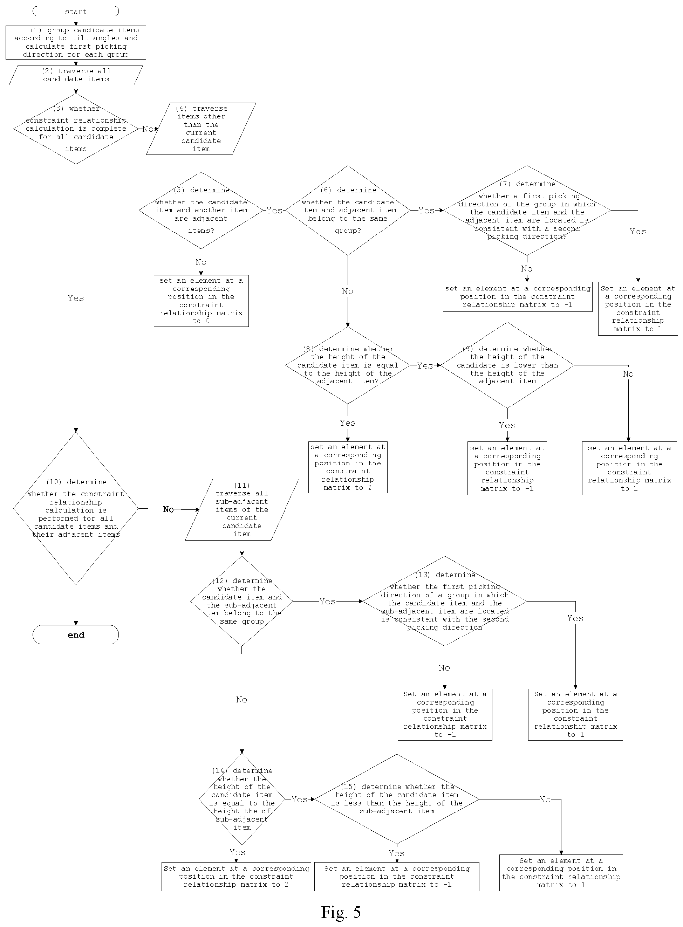

FIG. 5 shows a flowchart of generating a constraint relationship matrix according to some embodiments of the present disclosure.

As shown in FIG. 5, the generation of the constraint relationship matrix comprises steps (1) - (15).

In step (1), it is determined whether any two items have similar tilt tendencies based on the angle between the normal vector at the picking point on the picking surface of each item and the bottom of the box. Items with consistent tilt tendencies are grouped together, and a first picking direction is calculated for each group. The first picking direction, i.e., the sort direction by picking order, represents a directional spatial vector that indicates the picking order of the items, and is the stacking order of the items.

In step (2), each current item is used as a candidate for traversing all the items.

In step (3), it is determined whether the constraint relationship calculation is performed for all candidate items and their adjacent items, wherein in case that two items contact with each other, they are adjacent items, and the correspondence between any adjacent items is stored in an adjacent item set N. in case that so, the process proceeds to step (10); otherwise, the process proceeds to step (4).

In step (4), the process continues to traverse items other than the current candidate item.

In step (5), it is determined whether candidate item i and another item j are adjacent items. In case that so, the process proceeds to step (6); in case that not, the element adjacent_matrix[i,j] in the constraint matrix is set to 0.

In step (6), it is determined whether candidate item i and adjacent item j belong to a group with the same tilt tendency; in case that so, the process proceeds to step (7); in case that not, the process proceeds to step (8).

In step (7), it is determined whether a first picking direction of the group in which candidate item i and adjacent item j are located is consistent with a second picking direction that points from candidate item i to adjacent item j; in case that so, the element adjacent_matrix[i,j] in the constraint matrix is set to 1; in case that not, the element adjacent_matrix[i,j] is set to -1.

In step (8), it is determined whether the height of the candidate item is equal to the height of the adjacent item; in case that so, the element adjacent_matrix[i,j] in the constraint matrix is set to 2; otherwise, the process proceeds to step (9).

In step (9), it is determined whether the height of the candidate is lower than the height of the adjacent item; in case that so, the element adjacent_matrix[i,j] in the constraint matrix is set to -1; in case that not, the element adjacent_matrix[i,j] is set to 1.

In step (10), it is determined whether the constraint relationship calculation is performed for all candidate items and their adjacent items; in case that so, the process is terminated; in case that not, the process proceeds to step (11).

In step (11), an adjacent item of the adjacent item of the current candidate item is taken as a sub-adjacent item of the current candidate item, wherein the correspondence between an item and its sub-adjacent items is stored in a sub-adjacent item set M, and all the sub-adjacent items of the current candidate item in the set M are traversed.

In step (12), it is determined whether candidate item i and its sub-adjacent item j belong to a group with the same tilt tendency; in case that so, the process proceeds to step (13); in case that not, the process proceeds to step (14).

In step (13), it is determined whether the first picking direction of a group in which candidate item i and sub-adjacent item j are located is consistent with the second picking direction that points from candidate item i to sub-adjacent item j; in case that so, the element adjacent_matrix[i,j] in the constraint matrix is set to 1; in case that not, the element adjacent_matrix[i,j] is set to -1.

In step (14), it is determined whether the height of candidate item i is equal to the height of sub-adjacent item j; in case that so, the element adjacent_matrix[i,j] in the constraint matrix is set to 2; in case that not, the process proceeds to step (15).

In step (15), it is determined whether the height of candidate item i is less than the height of sub-adjacent item j; in case that so, the element adjacent_matrix[i,j] in the constraint matrix is set to -1; in case that not, the element adjacent_matrix[i,j] is set to 1. In addition, in case that the element adjacent_matrix[i,j] calculated in step (5) has a value of 0, but has a value of 1 or -1 as recalculated in step (15), the original calculation result is overwritten with the current calculation result.

This disclosure determines a proximity relationship between items and identifies proximity items that may have a constraint relationship with each other. Then, a stacking constraint relationship between the items is determined based on the proximity relationship and at least one of the heights or tilt angles of the items, such that a horizontal and/or vertical stacking relationship between the items can be identified, thereby avoiding the risk of picking an item that is being pressed down before other item that is pressing the item down, solving the problem that the mutual stacking of items affects the picking order, and improving the success rate of the robot arm for picking items.

In addition to directly determining a constraint relationship between the items, it is also possible to determine a constraint relationship between the picking surfaces of the items, which reflects a constraint relationship between the items. A method of determining a constraint relationship between the picking surfaces of the items will be introduced below.

The idea of determining a constraint relationship between the picking surfaces of the items is similar to directly determining a constraint relationship between the items. In the above method of directly determining a constraint relationship between the items, each item is used as a candidate to determine a proximity relationship and a constraint relationship between the items. When determining a constraint relationship between the picking surfaces of the items, each picking surface of an item is used as a candidate to determine a proximity relationship and a constraint relationship between the picking surfaces.

In some embodiments, an item comprises multiple picking surfaces, and determining a proximity relationship between the items based on the image of the box in which the items are located comprises: determining two picking surfaces as proximity picking surfaces to each other in case that the two picking surfaces contact with each other;

In case that a picking surface contacts with other two picking surfaces, determining that the other two picking surfaces are proximity picking surfaces to each other.

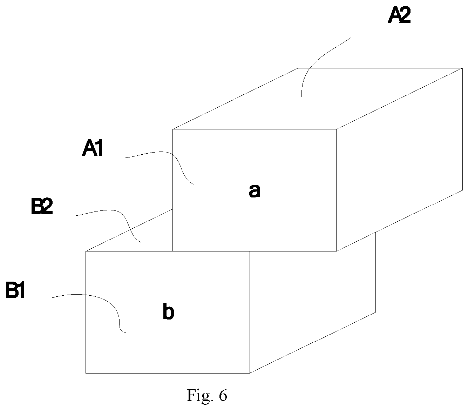

FIG. 6 shows a schematic diagram of stacked items according to some embodiments of the present disclosure.

FIG. 6 is a three-dimensional side view of items "a" and "b" that are stacked vertically. As shown in FIG. 6, surface A1 of item "a" and surface B1 of item "b" are proximity picking surfaces, surface A1 of item "a" and surface A2 of item "a" are proximity picking surfaces, and surface A1 of item "a" is a proximity picking surface of both surfaces B1 and B2 of item b. That is to say, not only can two picking surfaces of different items be proximity picking surfaces, but two picking surfaces of the same item can also be proximity picking surfaces.

In some embodiments, a machine learning model is used to recognize the image of the box in which the items are located and determine whether those picking surfaces are in contact with each other.

For example, in case that two picking surfaces have edges or surfaces that partially or completely overlap, the two picking surfaces are considered to be in contact with each other.

As shown in FIG. 6, since surfaces A1 and B1 have an interface edge, surface A1 of item "a" and surface B1 of item "b" are in contact with each other, and it is determined that surface A1 of item "a" is a proximity picking surface of surface B1 of item b.

The method of determining a constraint relationship between a picking surface and its proximity picking surface is similar to the method of determining a constraint relationship between an item and a proximity item of the item, which will be briefly introduced below. Please refer to the method of determining a constraint relationship between an item and a proximity item of the item for the same content of these two methods, which will not be repeated here.

In some embodiments, determining a constraint relationship between the items comprises: in case that the height of one picking surface is greater than the height of its proximity picking surface, determining that the picking surface has a constraint on the proximity picking surface.

For example, in FIG. 6, surface A1 is a proximity picking surface of surfaces B1 and B2, and its height is greater than the heights of surfaces B1 and B2. Therefore, surface A1 has a constraint on surfaces B1 and B2, and must be grasped before grasping either surface B1 or surface B2. The height of a picking surface can be the height of one edge of the picking surface, the height of the geometric center of the picking surface, the height of a picking point on the picking surface, etc., or multiple heights described above can be considered comprehensively according to actual needs.

In some embodiments, the tilt angle of an item comprises a tilt angle of a picking surface of the item, and determining a constraint relationship between the items comprises: grouping the picking surfaces of the items based on the tilt angles of the picking surfaces; in case that a picking surface and its proximity picking surface belong to the same group, determining a constraint relationship between the picking surface and the proximity picking surface based on their tilt angles. The tilt angle of a picking surface is a tilt angle of the normal vector at the picking point on the picking surface relative to the bottom plane of the box.

For example, picking surfaces with the same tilt tendency may overlap with each other. Therefore, picking surfaces with the same tilt tendency are grouped together and a stacking relationship is determined from the picking surfaces in the same group based on their tilt angles.

In some embodiments, grouping the multiple picking surfaces based on their tilt angles comprises: grouping picking surfaces with tilt angles within a predetermined range.

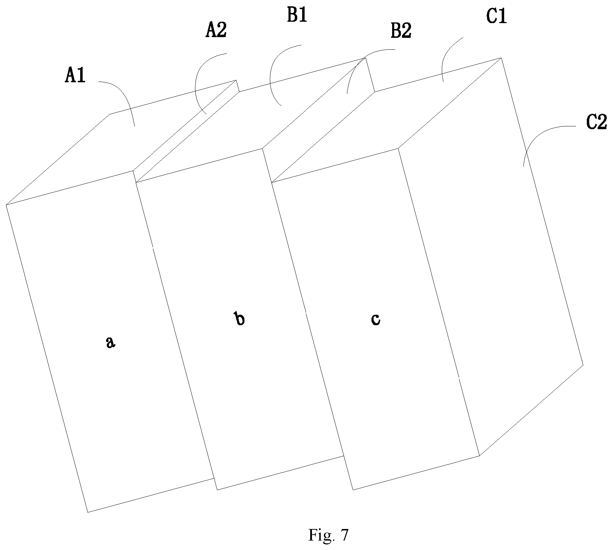

FIG. 7 shows a schematic diagram of stacked items according to other embodiments of the present disclosure.

In FIG. 7, for picking surfaces A1, B1, C1, A2, B2, and C2, picking surfaces A1, B1 and C1 can be grouped together and picking surfaces A2, B2, and C2 can be grouped together based on their tilt angles.

In some embodiments, determining a constraint relationship between a picking surface and its proximity picking surface comprises: determining a first picking direction based on the areas of the picking surfaces in each group, wherein the first picking direction indicates a first picking order of the picking surfaces belong to the same group; in case that a picking surface and its proximity picking surface belong to the same group, determining a second picking direction for the picking surface and its proximity picking surface based on the picking points of the picking surface and the proximity picking surface, wherein the second picking direction indicates a second picking order of the picking surface and the proximity picking surface; determining the constraint relationship between the picking surface and its proximity picking surface based on the first picking direction and the second picking direction. the second picking direction represents a direction from the picking point on the picking surface to the picking point on the proximity picking surface.

The first picking direction can be determined according to the following method to represent a stacking relationship between the picking surfaces in a group:
(1) calculating a first vector as a first picking direction in case that the ratio of the largest picking surface to the smallest picking surface among the picking surfaces belong to the same group exceeds a ratio threshold, wherein the first vector represents a direction from a picking point on the largest picking surface to a picking point on the smallest picking surface.
(2) among the picking surfaces belong to the same group, in case that the ratio of the largest picking surface to the smallest picking surface does not exceed the ratio threshold, calculating a second vector based on the tilt angles of the picking surfaces belong to the same group, wherein the second vector represents an overall tilt direction of the picking surfaces belong to the same group; determining the first vector as the first picking direction in case that an angle between the first vector and the second vector does not exceed a third threshold; determining the opposite direction of the first vector as the first picking direction in case that the angle between the first vector and the second vector exceeds the third threshold.

In some embodiments, determining the constraint relationship between the picking surface and the proximity picking surface based on the first picking direction and the second picking direction comprises: determining that the picking surface has a constraint on the proximity picking surface in case that the angle between the first picking direction and the second picking direction does not exceed a fourth threshold.

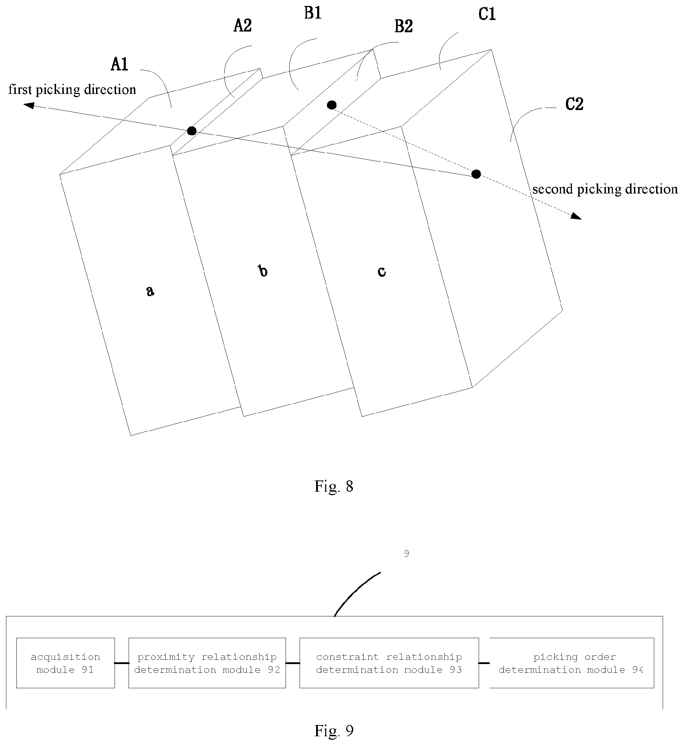

FIG. 8 shows a schematic diagram of determining a constraint relationship between proximity picking surfaces according to some embodiments of the present disclosure.

As shown in FIG. 8, the first picking direction of the group of picking surfaces A2, B2, and C2, as well as the second picking direction from B2 to C2, are similar to those in FIG. 4(d). Assuming that the second threshold is 90 degrees, the angle between the first picking direction and the second picking direction is greater than the second threshold. Therefore, picking surface A2 has no constraint on picking surface C2. On the contrary, picking surface C2 has a constraint on picking surface A2.

The image recognition schemes used in picking systems such as robot arms (for example, to recognize images to determine heights, contacts, etc.) employ supervised learning, which requires a large amount of annotated data. For the recognition schemes of 2D picking surfaces, the annotation technology is mature and low cost, and is easier for manual annotation. According to some embodiments of the present disclosure, the constraint relationship between picking surfaces is calculated on a per picking surface basis to determine the picking order, thereby reducing costs.

In some embodiments, determining the picking order of multiple items based on their constraint relationship comprises: generating a sort result based on picking information, wherein the sort result represents the difficulty of picking the items; determining the picking order of the multiple items based on the sort result and the constraint relationship between the items.

For example, a sort result indicating the difficulty of picking different items is generated based on the influence factors that represent the difficulty of picking the items. For example, a sort result is generated based on a weighted sum of the influence factors, or the influence factors are inputted into a machine learning model to obtain a sort result. The influence factors comprise: the area of each picking surface, the area of a maximum inscribed circle of each picking surface centered on the picking point, the angle between the normal vector at the picking point and the normal vector of the bottom surface of the box, the distance from the picking point to each surface of the box, the distance from the picking point to the center of the box, and the probability that an item recognized by the machine learning model is an item to be picked.

In step S4, a picking order is determined for the multiple items based on the constraint relationship.

For example, an item must be placed prior to other items that are constrained by this item in the picking order. For item i, in case that it is constrained by item j, then item j is prior to item i in the picking order, thus obtaining the picking order of the multiple items.

In some embodiments, determining a picking order for the multiple items based on the constraint relationship comprises: generating a sort result based on picking information, wherein the sort result represents the difficulty of picking the items; determining the picking order of the multiple items based on the sort result and the constraint relationship between the items.

For example, the picking order of the multiple items needs to meet the following conditions:

(1) Satisfy the constraint relationship between the items, that is, an item must be placed prior to other items that are constrained by this item in the picking order.

(2) Provided that condition (1) is satisfied, items whose sort position cannot be determined shall be sorted according to the sort result indicating the difficulty of picking the items. That is, in the case of a conflict between (1) and (2), it is necessary to ensure that the final item picking order satisfies condition (1).

In case that the constraint relationship between the items are directly obtained in step S3, then when calculating the sort result and the final picking order, the multiple items are sorted. In case that the constraint relationship between the picking surfaces is calculated in step S3, then when calculating the sort result and the final picking order, the multiple picking surfaces are sorted.

This disclosure first sorts items based on their difficulty in picking to obtain a sort result. Then, based on the constraint relationship, the initial sort result is rearranged to obtain a final picking order. In addition to meeting the requirements of the constraint relationship between items for the picking order, the difficulty of picking items is also taken into account, which not only solves the problem of stacked items affecting the gripping effect and causing item damage, but also achieves the goal of picking items that are easier to pick first, thereby improving the success rate and efficiency of picking.

FIG. 9 shows a block diagram of an item picking apparatus according to some embodiments of the present disclosure.

As shown in FIG. 9, the item picking apparatus 9 comprises an acquisition module 91, a proximity relationship determination module 92, a constraint relationship determination module 93, and a picking order determination module 94.

The acquisition module 91 is configured for acquiring picking information of multiple items in a box, wherein the picking information comprises picking surfaces and picking points of the items, and an image of the box in which the items are located. For example, the acquisition module 91 carries out step S1 shown in FIG. 1.

The proximity relationship determination module 92 is configured for determining a proximity relationship between the items according to the image of the box in which the items are located. For example, the proximity relationship determination module 92 carries out step S2 shown in FIG.1.

The constraint relationship determination module 93 is configured for determining a constraint relationship between the items based on the proximity relationship between the items and at least one of tilt angles or heights of the items, wherein the tilt angles of the items are determined based on the picking surfaces and picking points of the items, and the heights of the items are determined based on the image of the box in which the items are located. For example, the constraint relationship determination module 93 carries out step S3 shown in FIG.1.

The picking order determination module 94 is configured for determining a picking order for the multiple items based on the constraint relationship. For example, the picking order determination module 94 carries out step S4 shown in FIG. 1.

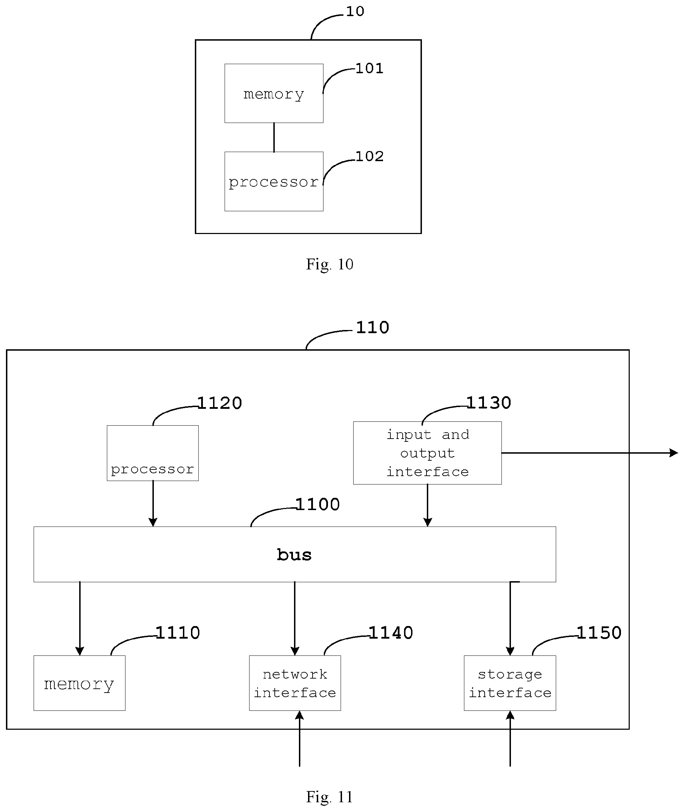

FIG. 10 shows a block diagram of an item picking apparatus according to other embodiments of the present disclosure.

As shown in FIG. 10, the item picking apparatus 10 comprises a memory 101 for storing an item picking method; and a processor 102 coupled to the memory 101. The processor 102 is configured to perform the item picking method according to some embodiments of the present disclosure based on the instructions stored in the memory 101.

FIG. 11 is a block diagram showing a computer system for implementing some embodiments of the present disclosure.

As shown in FIG. 11, the computer system 110 can be represented in the form of a general-purpose computing device. The computer system 110 comprises a memory 1110, a processor 1120, and a bus 1100 connecting different system components.

The memory 1110 may comprise, for example, a system memory, a non-volatile storage medium, and the like. The system memory stores, for example, an operating system, application programs, a boot loader, and other programs. The system memory may comprise a volatile storage medium such as random access memory (RAM) and/or cache memory. The non-volatile storage medium stores, for example, instructions for carrying out the item picking method according to any embodiments of the present disclosure. The non-volatile storage medium comprises, but not limited to, magnetic disk storage, optical storage, flash memory, and the like.

The processor 1120 may be implemented by discrete hardware components such as a general-purpose processor, a digital signal processor (DSP), an application specific integrated circuit (ASIC), a field programmable gate array (FPGA), or other programmable logic devices, discrete gates, or transistors. Accordingly, each device such as the judgment device and the determination device may be implemented by a central processing unit (CPU) running instructions that execute the corresponding steps, or may be implemented by a dedicated circuit that executes the corresponding steps.

The bus 1100 may has any of a variety of bus structures. For example, these structures comprise, but are not limited to, an Industry Standard Architecture (ISA) bus, a Micro Channel Architecture (MAC) bus, and peripheral component interconnects (PCI) bus.

The computer system 110 may further comprise an input-output interface 1130, a network interface 1140, a storage interface 1150, and the like. These interfaces 1130, 1140, 1150, the memory 1110 and the processor 1120 may be connected through a bus 1100. The input/output interface 1130 may provide a connection interface for input/output devices such as a display, a mouse, and a keyboard. The network interface 1140 provides a connection interface for various networked devices. The storage interface 1150 provides a connection interface for external storage devices such as a floppy disk, a flash disk, or an SD card.

Herein, various aspects of the present disclosure are described with reference to flowcharts and/or block diagrams of methods, devices and computer program products according to embodiments of the present disclosure. It should be understood that each block of the flowcharts and/or block diagrams and any combination of the blocks can be implemented by computer-readable program instructions.

These computer program instructions may be provided to a processor of a general purpose computer, a special purpose computer, or other programmable device to generate a machine such that the instructions executed by the processor generate means implementing the functions specified in one or more flows of the flowcharts and/or one or more blocks of the block diagrams.

These computer-readable program instructions may also be stored in a computer-readable storage device, and cause a computer to operate in a specific manner to produce a manufactured article including instructions to implement the functions specified in one or more flows of the flowcharts and/or one or more blocks of the block diagrams.

The present disclosure can take the form of an entirely hardware embodiment, an entirely software embodiment or an embodiment containing both hardware and software elements.

The item picking method and apparatus, and the computer-readable medium provided in the above embodiments can improve the success rate of picking items.

Heretofore, the item picking method and apparatus, and the computer-readable storage medium according to the present disclosure have been described in detail. In order to avoid obscuring the concepts of the present disclosure, some details known in the art are not described. Based on the above description, those skilled in the art can understand how to implement the technical solutions disclosed herein.

## Claims

1. An item picking method, comprising:
acquiring picking information of multiple items in a box, wherein the picking information comprises picking surfaces and picking points of the multiple items, and an image of the box in which the multiple items are located;
determining a proximity relationship between the multiple items based on the image of the box in which the multiple items are located;
determining a constraint relationship between the multiple items based on the proximity relationship between the multiple items and at least one of tilt angles or heights of the multiple items, wherein the tilt angles of the multiple items are determined based on the picking surfaces and the picking points of the multiple items, and the heights of the multiple items are determined based on the image of the box in which the multiple items are located; and
determining a picking order for the multiple items based on the constraint relationship.

2. The item picking method according to claim 1, wherein the determining the proximity relationship between the multiple items based on the image of the box in which the multiple items are located comprises:
in case that two items of the multiple items are in contact with each other, determining that the two items are proximity items to each other; and
in case that one item of the multiple items is in contact with two other items of the multiple items, determining that the two other items are the proximity items to each other.

3. The item picking method according to claim 2, wherein the determining the constraint relationship between the multiple items comprises:
in case that a height of one item of the multiple items is greater than a height of its proximity item, determining that the item has a constraint on the proximity item.

4. The item picking method according to claim 2, wherein the determining the constraint relationship between the multiple items comprises:
grouping the multiple items based on tilt angles of the multiple items; and
in case that an item and a proximity item of the item belong to a same group, determining the constraint relationship between the item and the proximity item based on the tilt angles of the item and the proximity item.

5. The item picking method according to claim 4, wherein the in case that the item and the proximity item of the item belong to the same group, determining the constraint relationship between the item and the proximity item based on their tilt angles comprises:
determining a first picking direction based on areas of the picking surfaces of items belong to the same group, wherein the first picking direction indicates a first picking order of the items belong to the same group;
determining a second picking direction of the item and the proximity item based on the picking points of the item and the proximity item, wherein the second picking direction indicates a second picking order of the item and the proximity item; and
determining the constraint relationship between the item and the proximity item based on the first picking direction and the second picking direction.

6. The item picking method according to claim 5, wherein the determining the first picking direction based on the areas of the picking surfaces of the items belong to the same group comprises:
in case that an area ratio of a largest picking surface to a smallest picking surface among the picking surfaces of the items belong to the same group exceeds a ratio threshold, calculating a first vector as the first picking direction, wherein the first vector represents a direction from a picking point on the largest picking surface to a picking point on the smallest picking surface.

7. The item picking method according to claim **6,** wherein the determining the first picking direction based on the areas of the picking surfaces of the items belong to the same group comprises:
in case that the area ratio of the largest picking surface to the smallest picking surface among the picking surfaces of the items belong to the same group does not exceed the ratio threshold, calculating a second vector based on the tilt angles of the items belong to the same group, wherein the second vector represents an overall tilt direction of the items belong to the same group;
determining the first vector as the first picking direction in case that an angle between the first vector and the second vector does not exceed a first threshold; and
determining an opposite direction of the first vector as the first picking direction in case that the angle between the first vector and the second vector exceeds the first threshold.

8. The item picking method according to claim 5, wherein the second picking direction is of a direction from a picking point on a picking surface of the item to a picking point on a picking surface of the proximity item.

9. The item picking method according to claim 5, wherein the determining the constraint relationship between the item and the proximity item based on the first picking direction and the second picking direction comprises:
in case that an angle between the first picking direction and the second picking direction does not exceed a second threshold, determining that the item has a constraint on the proximity item.

10. The item picking method according to claim 4, wherein the determining the constraint relationship between the multiple items comprises:
in case that the item and the proximity item do not belong to the same group and a height of the item is greater than a height of the proximity item, determining that the item has a constraint on the proximity item.

11. The item picking method according to claim 1, wherein the multiple items have multiple picking surfaces, and the determining the proximity relationship between the multiple items based on the image of the box in which the multiple items are located comprises:
in case that two picking surfaces of the multiple picking surfaces contact with each other, determining the two picking surfaces as proximity picking surfaces to each other; and
in case that one picking surface of the multiple picking surfaces contacts to other two picking surfaces of the multiple picking surfaces, determining that the other two picking surfaces are the proximity picking surfaces to each other.

12. The item picking method according to claim 11, wherein the determining the constraint relationship between the multiple items comprises:
in case that a height of a picking surface is greater than a height of its proximity picking surface, determining that the picking surface has a constraint on the proximity picking surface.

13. The item picking method according to claim 11, wherein a tilt angle of an item comprises a tilt angle of the picking surface of the item, and the determining the constraint relationship between the multiple items comprises:
grouping the picking surfaces of the multiple items based on the tilt angles of the picking surfaces; and
in case that a picking surface and its proximity picking surface belong to a same group, determining the constraint relationship between the picking surface and the proximity picking surface based on their tilt angles.

14. The item picking method according to claim 13, wherein the in case that the picking surface and its proximity picking surface belong to the same group, determining the constraint relationship between the picking surface and the proximity picking surface based on their tilt angles comprises:
determining a first picking direction based on the areas of the picking surfaces belong to the same group, wherein the first picking direction indicates a first picking order of the picking surfaces belong to the same group;
determining a second picking direction for the picking surface and the proximity picking surface based on the picking points of the picking surface and the proximity picking surface, wherein the second picking direction indicates a second picking order of the picking surface and the proximity picking surface; and
determining the constraint relationship between the picking surface and the proximity picking surface based on the first picking direction and the second picking direction.

15. The item picking method according to claim 14, wherein the determining the first picking direction based on the areas of the picking surfaces belong to the same group comprises:
in case that an area ratio of a largest picking surface to a smallest picking surface among the picking surfaces belong to the same group exceeds a ratio threshold, calculating a first vector as a first picking direction, wherein the first vector represents a direction from a picking point on the largest picking surface to a picking point on the smallest picking surface.

16. The item picking method according to claim 15, wherein the determining the first picking direction based on the areas of the picking surfaces of the items belong to the same group comprises:
in case that the ratio of the largest picking surface to the smallest picking surface among the picking surfaces belong to the same group does not exceed the ratio threshold, calculating a second vector based on the tilt angles of the picking surfaces belong to the same group, wherein the second vector represents an overall tilt direction of the picking surfaces belong to the same group;
in case that an angle between the first vector and the second vector does not exceed a third threshold, determining the first vector as the first picking direction; and
in case that the angle between the first vector and the second vector exceeds the third threshold, determining an opposite direction of the first vector as the first picking direction.

17. The item picking method according to claim 14, wherein the second picking direction represents a direction from a picking point on the picking surface to a picking point on the proximity picking surface.

18. The item picking method according to claim 14, wherein the determining the constraint relationship between the picking surface and the proximity picking surface based on the first picking direction and the second picking direction comprises:
in case that the angle between the first picking direction and the second picking direction does not exceed a fourth threshold, determining that the picking surface has a constraint on the proximity picking surface.

19. The item picking method according to claim 13, wherein the determining the constraint relationship between the multiple items comprises:
in case that the picking surface and the proximity picking surface do not belong to the same group and in case that a height of the picking surface is greater than a height of the proximity picking surface, determining that the picking surface has a constraint on the proximity picking surface.

20. The item picking method according to claim 1, wherein the determining the picking order for the multiple items based on the constraint relationship comprises:
generating a sort result based on picking information, wherein the sort result represents a difficulty of picking the multiple items; and
determining the picking order of the multiple items based on the sort result and the constraint relationship between the multiple items.

21. An item picking apparatus, comprising:
an acquisition module for acquiring picking information of multiple items in a box, wherein the picking information comprises picking surfaces and picking points of the multiple items, and an image of the box in which the multiple items are located;
a proximity relationship determination module 92 for determining a proximity relationship between the multiple items according to the image of the box in which the multiple items are located;
a constraint relationship determination module for determining a constraint relationship between the multiple items based on the proximity relationship between the multiple items and at least one of tilt angles or heights of the multiple items, wherein the tilt angles of the multiple items are determined based on the picking surfaces and picking points of the multiple items, and the heights of the multiple items are determined based on the image of the box in which the multiple items are located; and
a picking order determination module 94 for determining a picking order for the multiple items based on the constraint relationship.

22. An item picking apparatus, comprising:
a memory; and
a processor coupled to the memory, the processor configured to, based on instructions stored in the memory, carry out the item picking method according to any one of claims 1 to 20.

23. A computer-readable storage medium stored thereon computer program instructions that, when executed by a processor, implement the item picking method according to any one of claims 1 to 20.

24. A computer program, comprising:
instructions that, when executed by a processor, cause the processor to execute the item picking method according to any one of claims 1 to 20.
